# EUROPEAN PATENT APPLICATION

(11) **EP 2 633 898 A1**
(43) Date of publication of application: **04.09.2013**
(21) Application number: 11835953.8
(22) Date of filing: 05.09.2011
(51) Int. Cl.: B01D 65/02, B01D 63/02, C02F 1/44

(54) **HOLLOW FIBER MEMBRANE FILTRATION DEVICE AND METHOD FOR WASHING HOLLOW FIBER MEMBRANE MODULE**

(30) Priority: 27.10.2010 JP 2010240430
(71) Applicant: Toray Industries, Inc., Tokyo, 103-8666 (JP)
(72) Inventor: MORIKAWA, Hirofumi, Shiga 520-8558 (JP); IKEDA, Keiichi, Shiga 520-8558 (JP); OKUBO, Kenichi, Shiga 520-8558 (JP)
(74) Representative: Prüfer & Partner GbR European Patent Attorneys
(86) International application number: PCT/JP2011/070110
(87) International publication number: WO 2012/056812

(57) **Abstract**

In order to prevent the pressure increase under back-pressure washing of hollow fiber membranes while suppressing increase in filtration resistance of the membranes, using a simple and easy method in a membrane filtration method using the hollow fiber membranes, the present invention provides a hollow fiber membrane filtration device including a hollow fiber membrane module in which a hollow fiber membrane bundle formed of a plurality of hollow fiber membranes is inserted into a cylindrical case having a plurality of side nozzles at a side surface of the cylindrical case, provided with a water feed/drainage function, an upper-end nozzle on an upper-end face of the cylindrical case, provided with a water feed/drainage function and a lower-end nozzle on a lower-end face of the cylindrical case, provided with a water feed/drainage function, and at least one-sided end of the hollow fiber membrane bundle is fixed to the cylindrical case by bonding with resin in a position higher than any of positions of the plurality of side nozzles, in which at least two of the plurality of side nozzles are communicated with each other through a piping.

## Description

### TECHNICAL FIELD

The present invention relates to a hollow fiber membrane filtration device which can ensure the prevention of pressure increase occurring under the back-pressure washing of hollow fiber membranes, and relates to a method for washing a hollow fiber membrane module.

### BACKGROUND ART

Membrane filtration methods using hollow fiber membranes offer beneficial features, such as energy savings, space savings, labor savings and improvement in quality of filtrate, and applications thereof have therefore been extended to various fields. For instance, microfiltration membranes and ultrafiltration membranes have been applied to water-purification processes for producing industrial water and tap water from river water, ground water and treated sewage, and to pretreatments in reverse osmosis membrane treatment processes for desalination.

However, when raw water is filtrated with membrane, contaminants which are present in the raw water and targeted for elimination, such as turbid substances, organic matter and inorganic matter, accumulate on the membrane surface and cause membrane clogging. As a result, filtration resistance of the membrane increases, and finally, continuation of the filtration becomes impossible. Then it becomes necessary to clean the membrane for the purpose of suppressing the increase in filtration resistance of the membrane. As a method for cleaning the membrane, known is back-pressure washing that membrane filtrate is made to flow backward from the membrane's secondary side (filtrate side) to the membrane's primary side (raw water side). In order to suppress the increase in filtration resistance of the membrane, however, it is generally necessary to carry out such back-pressure washing with a flux not less than a membrane filtration flux, and hence there is a problem that the pressure required for back-pressure washing is very high.

With the intention of solving such a problem, proposed was, as disclosed e.g. in Patent Document 1, a method which includes a step of feeding washing water from the permeate side to the raw water side in a separation membrane module and draining the washing water from two gates on the raw water side and has a measure to cause a difference in amounts of the washing water drained from the two gates on the raw water side. A feature of this method consists in that the difference caused in amounts of drainage between the two exits produces a flow in the direction parallel to the membrane and the flow thus produced makes it easy to peel off an accretion on the separation membrane.

However, for the purpose of causing a difference in amounts of drainage between the two exits, it is required to set up at each of the exits a flow control mechanism, the setting-up of which is complicated and moreover has a problem that the pressure required for back-pressure washing remains very high.

### BACKGROUND ART DOCUMENT

### PATENT DOCUMENT

Patent Document 1: JP-A-2005-7324

### SUMMARY OF THE INVENTION

### PROBLEMS THAT THE INVENTION IS TO SOLVE

An object of the invention is to provide a hollow fiber membrane filtration device and a method for washing a hollow fiber membrane module, in which the device and the module adopt the membrane filtration using hollow fiber membranes and allow, by using a simple and easy method, the prevention of pressure increase under back-pressure washing of the hollow fiber membranes while suppressing increase in filtration resistance of the membranes.

### MEANS FOR SOLVING THE PROBLEMS

In order to achieve the foregoing, a hollow fiber membrane filtration device and a method for washing a hollow fiber membrane module of the present invention have the following features.

(1) A hollow fiber membrane filtration device including a hollow fiber membrane module in which a hollow fiber membrane bundle formed of a plurality of hollow fiber membranes is inserted into a cylindrical case having a plurality of side nozzles at a side surface of the cylindrical case, provided with a water feed/drainage function, an upper-end nozzle on an upper-end face of the cylindrical case, provided with a water feed/drainage function and a lower-end nozzle on a lower-end face of the cylindrical case, provided with a water feed/drainage function, and at least one-sided end of the hollow fiber membrane bundle is fixed to the cylindrical case by bonding with resin in a position higher than any of positions of the plurality of side nozzles,
   in which at least two of the plurality of side nozzles are communicated with each other through a piping.

(2) The hollow fiber membrane filtration device according to (1), in which the at least two side nozzles communicated with each other through the piping are positioned at different heights, and a junction in the communicated piping leading to feed/drainage of water is positioned equal in a vertical direction to or higher than the highest position among the at least two side nozzles communicated with each other through the piping.

(3) The hollow fiber membrane filtration device according to (1) or (2), in which all the side nozzles communicated with each other through the piping have a smaller inner diameter than the end nozzle on a membrane filtrate side.

(4) A method for washing a hollow fiber membrane module in a hollow fiber membrane filtration device including the hollow fiber membrane module in which a hollow fiber membrane bundle formed of a plurality of hollow fiber membranes is inserted into a cylindrical case having a plurality of side nozzles at a side surface of the cylindrical case, provided with a water feed/drainage function, an upper-end nozzle on an upper-end face of the cylindrical case, provided with a water feed/drainage function and a lower-end nozzle on a lower-end face of the cylindrical case, provided with a water feed/drainage function, and at least one-sided end of the hollow fiber membrane bundle is fixed to the cylindrical case by bonding with resin in a position higher than any of positions of the plurality of side nozzles, the method including:
   feeding clear water from the upper-end nozzle into the hollow fiber membrane module;
   simultaneously discharging wash drainages of the hollow fiber membranes from the plurality of side nozzles; and
   joining the discharged wash drainages together through a piping by which at least two of the plurality of side nozzles are communicated with each other.

(5) The method for washing a hollow fiber membrane module according to (4), in which the at least two side nozzles communicated with each other through the piping are positioned at different heights, and a junction in the communicated piping leading to discharge of the drainage is positioned equal in a vertical direction to or higher than the highest position among the at least two side nozzles communicated with each other through the piping.

(6) The method for washing a hollow fiber membrane module according to (4) or (5), in which all the side nozzles communicated with each other through the piping have a smaller inner diameter than the end nozzle on a membrane filtrate side.

### ADVANTAGE OF THE INVENTION

According to the hollow fiber membrane filtration device of the invention, since a piping through which a plurality of side nozzles are communicated with each other is provided, it becomes possible by using a simple and easy method to prevent pressure increase under the back-pressure washing of hollow fiber membranes while suppressing increase in filtration resistance of the membranes. Further, according to the method for washing the hollow fiber membrane module of the invention, wash drainages of hollow fiber membranes are discharged simultaneously from a plurality of side nozzles on a cylindrical case, and the wash drainages discharged are made to join together through the piping by which the plurality of side nozzles are communicated with each other, whereby the use of a simple and easy method makes it possible to prevent pressure increase under the back-pressure washing of hollow fiber membranes while suppressing the increase in filtration resistance of the membranes.

### BRIEF DESCRIPTION OF THE DRAWINGS

[Fig. 1] Fig. 1 is a schematic in-device flow diagram showing an example of the hollow fiber membrane filtration device to which the invention is applied.
[Fig. 2] Fig. 2 is a schematic in-device flow diagram showing one example of conventional hollow fiber membrane filtration devices.
[Fig. 3] Fig. 3 is a schematic in-device flow diagram showing another example of conventional hollow fiber membrane filtration devices.

### MODE FOR CARRYING OUT THE INVENTION

On the basis of the embodiment shown in the diagram, the invention is illustrated below in further detail. Incidentally, the invention should not be construed as being limited to the embodiment illustrated below.

The hollow fiber membrane filtration device of the invention is, as shown e.g. in Fig.l, provided with a raw-water storage tank 1 for storing raw water, a raw-water feed pump 2 for feeding raw water, a raw-water feed valve 3 which gets opened at the time of feeding raw water, a hollow fiber membrane module 4 for filtering raw water, an air release valve 5 which enters an opened state on the occasion of back-pressure washing, air scrubbing or the like, a filtrate valve 6 which gets opened at the time of membrane filtration, a membrane filtrate storage tank 7 for storing membrane filtrate, a backwash pump 8 for feeding membrane filtrate into the hollow fiber membrane module 4, thereby performing back-pressure washing, a backwash valve 9 which gets opened at the time of the back-pressure washing with the membrane filtrate, a discharging valve 10 which enters an opened state in the case of discharging away the water on the primary side of the hollow fiber membrane module 4, an air-scrub valve 11 which enters an opened state in the case of performing scrub with air by feeding compressed air to the lower portion of the hollow fiber membrane module 4, a compressor 12 which is a source of compressed-air feed, a communicating pipe 13 by which two side nozzles of the hollow fiber membrane module 4 are communicated with each other, and a junction 14 in which drainages from the two side nozzles of the hollow fiber membrane module 4 are joined together.

The hollow fiber membrane module 4 is structured so that a hollow fiber membrane bundle which is formed of a plurality of hollow fiber membranes is inserted into a cylindrical case having a plurality of side nozzles at a side surface of the cylindrical case, provided with a water feed/drainage function, an upper-end nozzle on an upper-end face of the cylindrical case, provided with a water feed/drainage function and a lower-end nozzle on a lower-end face of the cylindrical case, provided with a water feed/drainage function, and at least one-sided end of the hollow fiber membrane bundle is fixed to the cylindrical case by bonding with resin in a position higher than any of positions of the plurality of side nozzles. Hollow fiber membrane modules are of two types, an external-pressure type and an internal-pressure type. In the external-pressure type, raw water is fed to the outside of the hollow fiber membranes, and membrane filtrate is discharged from inside the hollow fiber membranes and further discharged from an end-face nozzle on the cylindrical case. In the internal-pressure type, on the other hand, raw water is fed from an end-face nozzle of the cylindrical case and fed to the inside of the hollow fiber membranes, and membrane filtrate is discharged from outside the hollow fiber membranes. The invention is intended for a hollow fiber membrane module of the external-pressure type.

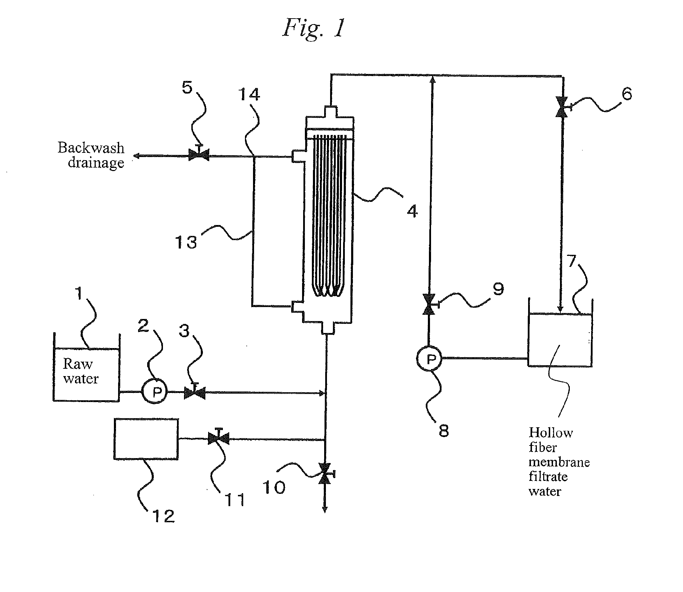

Although Fig. 1 shows a case in which two side nozzles, one upper-end nozzle and one lower-end nozzle, are provided, there is nothing wrong with providing three or more side nozzles, two or more upper-end nozzles and two or more lower-end nozzles. In addition, Fig. 1] shows a case in which, after bending the hollow fiber membrane bundle into the shape of the letter "U", each end portion of the bundle is, in one region thereof, fixed to the cylindrical case by bonding with resin, but there is nothing wrong with giving a straight form to a hollow fiber membrane bundle and fixing independently its end portions each to the cylindrical case by bonding with resin. In the case where the hollow fiber membrane bundle has the shape of the letter "U", the inside of the hollow fiber membranes in the hollow fiber membrane bundle's end portions fixed by bonding with resin is communicated with an end nozzle closer to the bond region (the upper-end nozzle in the case shown in Fig. 1), and hence the end nozzle is situated on the membrane filtrate side and the rest of the nozzles including the side nozzles are situated on the raw water side. In the case where the hollow fiber membrane bundle has a straight form, the inside of the hollow fiber membranes in one of the hollow fiber membrane bundle's end portions with regions fixed to the cylindrical case by bonding with resin is communicated with an end nozzle closer to the resin-bonded region, and hence the end nozzle is situated on the membrane filtrate side and the rest of the nozzles including side nozzles are situated on the raw water side. And the resin-bonded region lies in a higher position than all the plurality of side nozzles. In the other resin-bonded region, the end portions of hollow fiber membranes are buried in the resin and not set free, but therein holes are made so as to allow passage of raw water and air for air scrubbing, and hence the side nozzles are situated on the raw water side as is the end nozzle other than the end nozzle on the membrane filtrate side.

The hollow fiber membranes which form a hollow fiber membrane bundle have no particular restriction on their material, and examples of the material include polysulfone, polyethersulfone, polyacrylonitrile, polyimide, polyetherimide, polyamide, polyether ketone, polyether ether ketone, polyethylene, polypropylene, ethylene-vinyl alcohol copolymer, cellulose, cellulose acetate, polyvinylidene fluoride, ethylene-tetrafluoroethylene copolymer, polytetrafluoroethylene, and composite materials of these polymers. Of these materials, polyvinylidene fluoride is superior to the others in chemical resistance, and therefore the filtration function of hollow fiber membranes made therefrom can be restored by periodic cleaning of the hollow fiber membranes with chemicals and extension of their lifespan becomes possible. Thus the polyvinylidene fluoride is favorable to using as material of the hollow fiber membranes.

Additionally, it is preferable that the hollow fiber membranes have an outside diameter of from 0.3 mm to 3 mm. This is because, when hollow fiber membranes are too small in outside diameter, there arises a problem such that the hollow fiber membranes suffer damage caused by breaks e.g. under their handling during the making of a hollow fiber membrane module and under filtration, wash and the like during the use of a hollow fiber membrane module, while hollow fiber membranes too large in outside diameter cause a problem such that the hollow fiber membranes capable of being inserted in a cylindrical case, the size thereof being the same, are lower in number to result in reduction of filtration area. Moreover, it is preferable that the hollow fiber membranes have a thickness of from 0.1 mm to 1 mm. This is because too small thicknesses cause in the case of a hollow fiber membrane module a problem such that the membranes are broken by pressure, while too large membrane thicknesses make a problem such that they lead to increases in pressure damage and material cost.

Examples of a material for the cylindrical case include polyolefin resins such as polyethylene, polypropylene and polybutene, fluorocarbon resins such as polytetrafluoroethylene (PTFE), tetrafluoroethylene-perfluoroalkyl vinyl ether copolymer (PFA), fluoroethylene-polypropylene copolymer (FEP), ethylene-tetrafluoroethylene copolymer (ETFE), polychlorotrifluoroethylene (PCTFE), ethylene chloride trifluoride-ethylene copolymer (ECTFE) and polyvinylidene fluoride (PVDF), chlorocarbon resins such as polyvinyl chloride and polyvinylidene chloride, polysulfone resin, polyethersulfone resin, polyallylsulfone resin, polyphenyl ether resin, acrylonitrile-butadiene-styrene copolymer resin (ABS), acrylonitrile-styrene copolymer resin, polyphenylene sulfide resin, polyamide resin, polycarbonate resin, polyetherketone resin and polyetheretherketone resin. These resins may be used alone or as mixtures of two or more thereof. As materials other than such resins, aluminum, stainless steel and the like are suitable, and a complex of a resin with metal and composite materials such as glass fiber reinforced resins and carbon fiber reinforced resins may be used.

The communicating pipe 13 communicates with a plurality of side nozzles which the hollow fiber membrane module 4 has, and the number of the side nozzles communicated with the pipe is not limited to 2 shown in Fig. 1, but may be 3 or more. The communicating pipe 13 communicates with a plurality of side nozzles, whereby it becomes possible to use the plurality of side nozzles as discharge ports of backwash drainages on the occasion of back-pressure washing of the hollow fiber membrane module. As a result, not only reduction of required pressure becomes possible, but also back pressures of backwash drainages discharged from a plurality of side nozzles become equal at the junction 14, and hence uniform discharge of contaminants, e.g. turbid substances and organic matter, present in the raw-water side interior of the hollow fiber membrane module becomes possible.

Examples of a material for the communicating pipe 13 include polyolefin resins such as polyethylene, polypropylene and polybutene, fluorocarbon resins such as polytetrafluoroethylene (PTFE), tetrafluoroethylene-perfluoroalkyl vinyl ether copolymer (PFA), fluoroethylene-polypropylene copolymer (FEP), ethylene-tetrafluoroethylene copolymer (ETFE), polychlorotrifluoroethylene (PCTFE), ethylene chloride trifluoride-ethylene copolymer (ECTFE) and polyvinylidene fluoride (PVDF), chlorocarbon resins such as polyvinyl chloride and polyvinylidene chloride, polysulfone resin, polyethersulfone resin, polyallylsulfone resin, polyphenyl ether resin, acrylonitrile-butadiene-styrene copolymer resin (ABS), acrylonitrile-styrene copolymer resin, polyphenylene sulfide resin, polyamide resin, polycarbonate resin, polyetherketone resin and polyetheretherketone resin. These resins may be used alone or as mixtures of two or more thereof. As materials other than such resins, aluminum, stainless steel and the like are suitable, and a complex of a resin with metal and composite materials such as glass fiber reinforced resins and carbon fiber reinforced resins may be used.

The junction 14 of a plurality of side nozzles may be situated in any position, but it is preferable that the position of the junction 14 is equal to in a vertical direction or higher than the highest position among the at least two side nozzles communicated with each other through the piping. This is because such positioning brings about a difference in amount of drainages between the side nozzles on the occasion of back-pressure washing of the hollow fiber membrane module, whereby a flow parallel to hollow fiber membranes is produced to make it easy to peel off accretions having adhered to the hollow fiber membranes.

In addition, in the hollow fiber membrane module 4 of the hollow fiber membrane filtration device in the invention, it is preferred that the end nozzle on the membrane filtrate side (the upper-end nozzle in the case shown in Fig. 1) is designed at a higher position than the other end nozzle (the lower-end nozzle in the case shown in Fig. 1). Additionally, the axial direction of the cylindrical case is brought as close to the vertical direction as possible, whereby a greater difference in amount of drainage between the side nozzles is made, and a flow parallel to the hollow fiber membranes is produced more. As a result, fouling having adhered to the hollow fiber membranes become easier to peel off.

For all the communicated side nozzles of the hollow fiber membrane module 4 in the hollow fiber membrane filtration device of the invention, it is appropriate to be designed to have an inner diameter smaller than that of the end nozzle on the membrane filtrate side (the upper-end nozzle in the case shown in Fig. 1). This is because the installation area of the communicating pipe can be reduced.

Next, a case where treatment of raw water is carried out by the hollow fiber membrane filtration device structured as mentioned above is illustrated through the use of Fig. 1.

The raw water stored in a raw-water storage tank 1 is fed to the raw-water side of the hollow fiber membrane module 4 through the use of a raw-water feed pump 2 after opening the raw-water feed valve 3. The air having been accumulated on the raw-water side of the hollow fiber membrane module 4 is released from an air release valve 5 in an opened state, and the air release valve 5 gets closed after completion of the air release. The membrane filtrate is discharged from the hollow fiber membrane module 4 through the filtrate valve 6 in an opened state. Thus, the membrane filtration process is achieved, and the membrane filtrate discharged is stored in a membrane filtrate storage tank 7. After continuing the membrane filtration over a predetermined period of time, the raw-water feed pump 2 is caused to stop and the raw-water feed valve 3 and the filtrate valve 6 get closed, and then the switch to a washing process described below is made.

In a washing process, the membrane filtrate stored in the membrane filtrate storage tank 7 is fed to the membrane filtrate side of the hollow fiber membrane module 4 by the backwash pump 8 after the backwash valve 9 gets opened. The backwash water having passed through the hollow fiber membranes in the direction opposite to that of the membrane filtration is discharged as wash drainage from the hollow fiber membrane module 4 via the air release valve 5 in an opened state, and thus a back-pressure washing process is achieved. After continuing the backwash over a predetermined period of time, the backwash pump 8 is caused to a stop and the backwash valve 9 gets closed. Simultaneously with or subsequently to the backwash, it is also possible to carry out such a process of scrubbing with air that the hollow fiber membranes are shaken and scrubbed with the air fed from a compressor 12 into the hollow fiber membrane module 4 by opening an air-scrub valve 11. And by closing the air-scrub valve 11 and opening a discharging valve 10, the wash drainage retained on the raw-water side of the hollow fiber membrane module 4 is discharged away from the hollow fiber membrane module 4. Thus, the washing process comes to an end. Then, getting back to the initial membrane filtration process, treatment of raw water is repeated.

In the washing process, wash drainages having passed through the hollow fiber membranes in the direction opposite to that of membrane filtration are discharged simultaneously from a plurality of side nozzles of the cylindrical case for the hollow fiber membrane module 4. And the wash drainages discharged are made to join together at the junction 14 via the communicating pipe 13 which is in communication with the plurality of side nozzles, whereby it becomes possible not only to reduce the pressure required on the occasion of the back-pressure washing of the hollow fiber membrane module 4 but also to perform uniform discharge of contaminants, e.g. turbid substances and organic matter, present in the raw water-sided interior of the hollow fiber membrane module 4.

The position of the junction at which wash drainages join together after discharge may be any position, but it is preferable that the junction in communicated piping leading to the drainage of wash drainages is situated at a position equal in vertical direction to or higher than the highest position among the at least two side nozzles communicated with each other through the piping. This is because, on the occasion of the back-pressure washing of the hollow fiber membrane module 4, a difference in amount of drainage between the side nozzles is caused, whereby a flow parallel to hollow fiber membranes is produced and makes it easy to peel off fouling having adhered to the hollow fiber membranes.

### EXAMPLES

### <Example 1>

By using as a hollow fiber membrane module one PVDF hollow fiber membrane module of external pressure type, HFU-2020 (made by Toray Industries, Inc., 2160 mm in entire length, 65 mm in inner diameter of the upper-end nozzle, 65 mm in inner diameter of the lower-end nozzle and 50 mm in inner diameter of side nozzles (two in number)), an experiment according to the flow diagram shown in Fig. 1] was carried out under the conditions described below. Additionally, the hollow fiber membrane module was set up so as to hold the axial direction of its cylindrical case in the vertical direction, and the junction 14 of the side nozzles was provided at the same position in the vertical direction as the position of the upper side nozzle.

After performing filtration under conditions that Biwa Lake water (water temperature: 15 to 25°C, turbidity: 3 to 7 NTU (Nephelometric Turbidity Unit), TOC (Total Organic Carbon): 2-3 mg/L) was used as raw water, the filtration flux was set at 2.0 m³/(m² d), the entire-amount and constant-flow filtration mode was adopted and the membrane filtration process time was set at 30 minutes, the hollow fiber membrane module was washed by undergoing processes below in order of mention, namely a 30-second back-pressure washing process using a flux 1.5 times the filtration flux, a 30-second air scrubbing process, a process of discharging the entire amount of water on the raw-water side of interior of the hollow fiber membrane module and a process of filling the raw-water side of the interior of the hollow fiber membrane module with raw water to the capacity, and then the membrane filtration process using the hollow fiber membrane module was resumed. This series of operations was carried out repeatedly. In addition, an operation below was carried out for once a day. In the operation, the hollow fiber membrane module was subjected to backwash including a process using oxidant-containing water, and more specifically, the backwash was performed by undergoing a sequence of processes below, namely a 120-second backwash process using clear water obtained by filtration through the hollow fiber membrane module, a 20-minute oxidant-retaining process, a 120-second backwash process using the oxidant-free clear water as a rinse, a process of discharging the entire amount of water on the raw-water side of the interior of the filtration membrane module and a process of filling the raw-water side of the interior of the filtration membrane module with raw water to the capacity, and further an operation for a return to the membrane filtration process was carried out. In the backwash process, an aqueous solution of sodium hypochloride (12%) was injected as the oxidant so that the chlorine concentration amounted to 300 mg/L.

In early-stage running of the operations, the transmembrane pressure in the membrane filtration process was 20 kPa as corrected for a temperature of 25°C, and the transmembrane pressure in the back-pressure washing process was 30 kPa as corrected for a temperature of 25°C. It is the better that this pressure is lower since it results in the less power consumption of a backwash pump 8. In addition, the transmembrane pressure in the membrane filtration process after 3-month running of the operations was 40 kPa as corrected for a temperature of 25°C. It is the better that this pressure is lower since it reduces an increase in filtration resistance of the membranes to the smaller value to result in the less power consumption of a raw-water feed pump 2.

### <Example 2>

The operations in Example 1 were carried out under the same conditions as in Example 1, except that the position of the junction of the side nozzles was adjusted to be higher than that of the upper-end nozzle by 20 cm.

In early-stage running of the operations, the transmembrane pressure in the membrane filtration process was 20 kPa as corrected for a temperature of 25°C, and the transmembrane pressure in the back-pressure washing process was 30 kPa as corrected for a temperature of 25°C. In addition, the transmembrane pressure in the membrane filtration process after 3-month running of the operations was 40 kPa as corrected for a temperature of 25°C.

### <Example 3>

The operations in Example 1 were carried out under the same conditions as in Example 1, except that the position of the junction of the side nozzles was adjusted to be lower than that of the upper-end nozzle by 20 cm.

In early-stage running of the operations, the transmembrane pressure in the membrane filtration process was 20 kPa as corrected for a temperature of 25°C, and the transmembrane pressure in the back-pressure washing process was 30 kPa as corrected for a temperature of 25°C. In addition, the transmembrane pressure in the membrane filtration process after 3-month running of the operations was 45 kPa as corrected for a temperature of 25°C.

### <Example 4>

The operations in Example 1 were carried out under the same conditions as in Example 1, except that the inner diameter of the upper-end nozzle was reduced to 50 mm that was equal to the inner diameter of side nozzles.

In early-stage running of the operations, the transmembrane pressure in the membrane filtration process was 25 kPa as corrected for a temperature of 25°C, and the transmembrane pressure in the back-pressure washing process was 37 kPa as corrected for a temperature of 25°C. In addition, the transmembrane pressure in the membrane filtration process after 3-month running of the operations was 45 kPa as corrected for a temperature of 25°C.

### <Comparative Example 1>

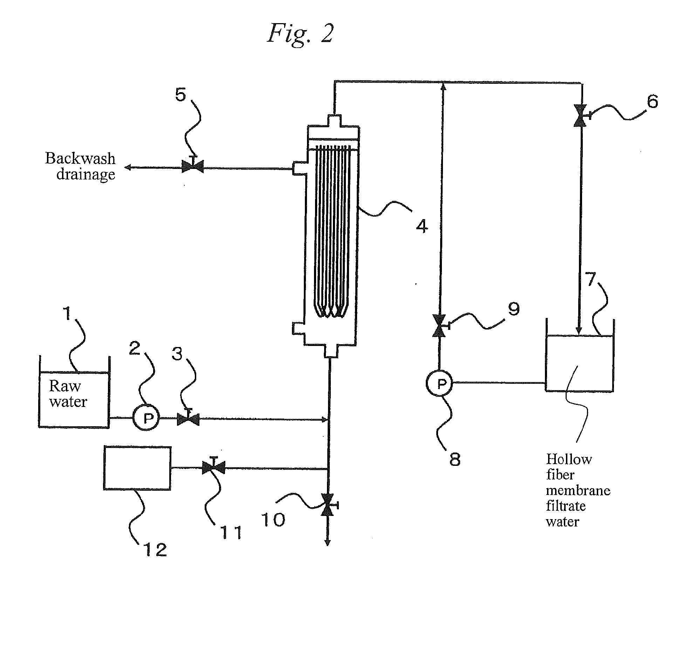

The operations in Example 1 were carried out under the same conditions as in Example 1, except that the experiment was performed, as indicated by the flow diagram shown in Fig. 2, by using only the upper side nozzle without using the lower side nozzle, without using the communicating pipe between the side nozzles and without providing the junction.

In early-stage running of the operations, the transmembrane pressure in the membrane filtration process was 20 kPa as corrected for a temperature of 25°C, and the transmembrane pressure in the back-pressure washing process was 40 kPa as corrected for a temperature of 25°C. In addition, the transmembrane pressure in the membrane filtration process after 3-month running of the operations was 60 kPa as corrected for a temperature of 25°C.

### <Comparative Example 2>

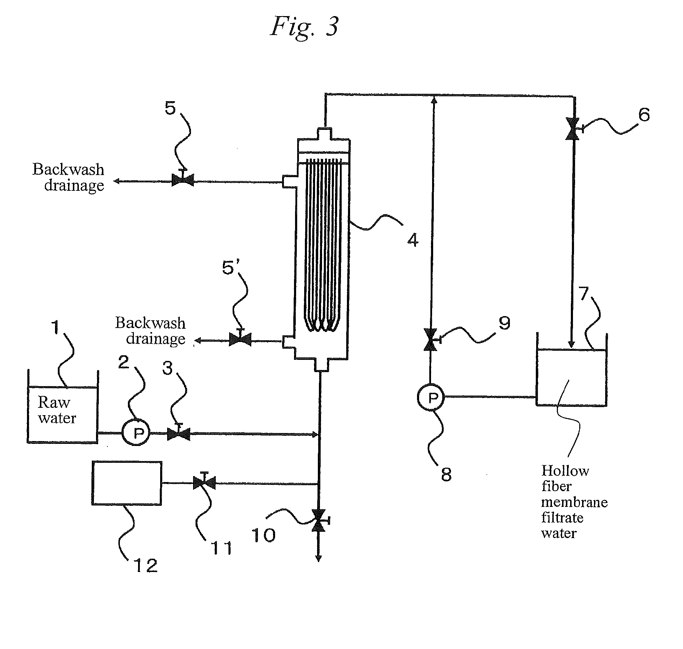

The operations in Example 1 were carried out under the same conditions as in Example 1, except that the experiment was performed, as indicated by the flow diagram shown in Fig. 3, without using the communicating pipe between the side nozzles and without providing the junction.

In early-stage running of the operations, the transmembrane pressure in the membrane filtration process was 20 kPa as corrected for a temperature of 25°C and, though the transmembrane pressure in the back-pressure washing process was 38 kPa as corrected for a temperature of 25°C, no wash drainage was discharged from the upper one of the two side nozzles. In addition, the transmembrane pressure in the membrane filtration process after 10-day running of the operations reached to 150 kPa as corrected for a temperature of 25°C, and it was impossible to further carry on the operations.

### INDUSTRIAL APPLICABILITY

An object of the invention relates to a hollow fiber membrane filtration device and a method for washing a hollow fiber membrane module which are applicable to water-purification processes for producing industrial water and tap water from river water, ground water and treated sewage, and further relates to pretreatments in reverse osmosis membrane treatment processes for desalination. And the invention can provide low-cost methods for water purification and pretreatment in a reverse osmosis membrane treatment process for desalination, which both allow, by the use of a simple and easy method, prevention of pressure increase under the back-pressure washing of hollow fiber membranes while suppressing increase in filtration resistance of the membranes, thereby making it possible to maintain consistent quantity and quality of the water produced while reducing the cost of facilities, especially spec requirements for a control mechanism of a flow rate in back-pressure washing.

### DESCRIPTION OF REFERENCE NUMERALS AND SIGNS

1: Raw-water storage tank
2: Raw-water feed pump
3: Raw-water feed valve
4: Hollow fiber membrane module
5, 5': Air release valve
6: Filtrate valve
7: Membrane filtrate storage tank
8: Backwash pump
9: Backwash valve
10: Drainage pump
11: Air-scrub valve
12: Compressor
13: Communicating pipe
14: Junction

## Claims

1. A hollow fiber membrane filtration device comprising a hollow fiber membrane module in which a hollow fiber membrane bundle formed of a plurality of hollow fiber membranes is inserted into a cylindrical case having a plurality of side nozzles at a side surface of the cylindrical case, provided with a water feed/drainage function, an upper-end nozzle on an upper-end face of the cylindrical case, provided with a water feed/drainage function and a lower-end nozzle on a lower-end face of the cylindrical case, provided with a water feed/drainage function, and at least one-sided end of the hollow fiber membrane bundle is fixed to the cylindrical case by bonding with resin in a position higher than any of positions of the plurality of side nozzles,
wherein at least two of the plurality of side nozzles are communicated with each other through a piping.

2. The hollow fiber membrane filtration device according to claim 1, wherein the at least two side nozzles communicated with each other through the piping are positioned at different heights, and a junction in the communicated piping leading to feed/drainage of water is positioned equal in a vertical direction to or higher than the highest position among the at least two side nozzles communicated with each other through the piping.

3. The hollow fiber membrane filtration device according to claim 1] or 2, wherein all the side nozzles communicated with each other through the piping have a smaller inner diameter than the end nozzle on a membrane filtrate side.

4. A method for washing a hollow fiber membrane module in a hollow fiber membrane filtration device comprising the hollow fiber membrane module in which a hollow fiber membrane bundle formed of a plurality of hollow fiber membranes is inserted into a cylindrical case having a plurality of side nozzles at a side surface of the cylindrical case, provided with a water feed/drainage function, an upper-end nozzle on an upper-end face of the cylindrical case, provided with a water feed/drainage function and a lower-end nozzle on a lower-end face of the cylindrical case, provided with a water feed/drainage function, and at least one-sided end of the hollow fiber membrane bundle is fixed to the cylindrical case by bonding with resin in a position higher than any of positions of the plurality of side nozzles, the method comprising:
feeding clear water from the upper-end nozzle into the hollow fiber membrane module;
simultaneously discharging wash drainages of the hollow fiber membranes from the plurality of side nozzles; and
joining the discharged wash drainages together through a piping by which at least two of the plurality of side nozzles are communicated with each other.

5. The method for washing a hollow fiber membrane module according to claim 4, wherein the at least two side nozzles communicated with each other through the piping are positioned at different heights, and a junction in the communicated piping leading to discharge of the drainage is positioned equal in a vertical direction to or higher than the highest position among the at least two side nozzles communicated with each other through the piping.

6. The method for washing a hollow fiber membrane module according to claim 4 or 5, wherein all the side nozzles communicated with each other through the piping have a smaller inner diameter than the end nozzle on a membrane filtrate side.
